# EUROPEAN PATENT SPECIFICATION

(11) **EP 2 701 285 B1**
(45) Date of publication and mention of the grant of the patent: **15.11.2017**
(21) Application number: 13179756.5
(22) Date of filing: 08.08.2013
(51) Int. Cl.: H02K 3/52

(54) **Motor stator with insulating portions provided with electric terminals**
Isolierkörper mit elektrischen Anschlüssen für einen Motorstator
Stator de moteur avec corps isolant pourvu de contacts électriques

(30) Priority: 10.08.2012 JP 2012178070
(43) Date of publication of application: 26.02.2014
(73) Proprietor: Mitsubishi Electric Corporation, Chiyoda-ku Tokyo 100-8310 (JP)
(72) Inventor: Takeuchi, Yasumasa, Chiyoda-ku, Tokyo 100-8310 (JP); Ono, Junichi, Chiyoda-ku, Tokyo 100-8310 (JP); Matsuda, Shigeru, Chiyoda-ku, Tokyo 100-8310 (JP)
(74) Representative: Moore, Graeme Patrick

(56) References cited:
- EP-A2- 2 424 078
- WO-A2-2009/069103
- JP-A- H07 284 239
- JP-A- 2011 035 984
- JP-A- 2012 100 421

## Description

### [Technical Field]

The present invention relates to a motor stator that has terminals for supplying power to windings and a substrate for driving a motor, a motor using the stator, and a facility system provided with the motor.

### [Background Art]

There have been motor stators that have three terminals for supplying power to three-phase single Y-connection windings. Examples of this type of motor stator include a motor stator that is formed by winding a wire around a stator core, engaging terminal ends of the windings to parts called "terminals", which are formed by bending square wire, and electrically connecting power terminals and a neutral-point terminal by a heat-crimping method called "fusing" (for example, see Patent Literatures 1 and 2).

In the techniques disclosed in Patent Literatures 1 and 2, in order to electrically connect the windings and a substrate for causing an electrical current to flow through the windings to drive a motor, when the substrate is mounted to a motor stator, three terminals are inserted into predetermined holes in the substrate, and the terminals and an electrical circuit on the substrate are soldered together to form electrical connection.

### [Citation List]

### [Patent Literature]

[Patent Literature 1] Japanese Unexamined Patent Application Publication No. 2002-119005 (Embodiment 1, etc.)
[Patent Literature 2] Japanese Unexamined Patent Application Publication No. 2011-035947 (Embodiment 1, etc.)

JP2012/100421 shows an electrical motor where the stator windings are connected to a circuit board via bent rectangular wire terminals. These terminals are placed in an stator end insulation ring.

### [Summary of Invention]

### [Technical Problem]

If the holes provided in the substrate and the terminals are misaligned when the substrate is to be mounted to the stator, a force generated when the substrate is mounted (a substrate-insertion force) may be applied to the terminals. In such a situation, in the techniques disclosed in Patent Literatures 1 and 2, the terminals may be unable to withstand the substrate-insertion force and may result in deformation (e.g., buckling or distortion). That is, in the techniques disclosed in Patent Literatures 1 and 2, if the centers of the holes provided in the substrate and the centers of the terminals are misaligned, even if tips of the terminals are inclined at an acute angle, because there is an allowance that allows deformation of the terminals, when the inclined portions at the top ends of the terminals are pushed by the substrate, the terminals are deformed toward the allowance.

The present invention has been made to solve the above-described problems, and an object thereof is to provide a high-quality motor stator that can ensure electrical connection between windings and terminals and electrical connection between the terminals and a substrate by suppressing deformation of the terminals when a substrate-insertion force is applied to the terminals, and to provide a motor and a facility system.

### [Solution to Problem]

A motor stator according to the present invention includes a stator core that has a plurality of teeth; insulating portions provided on the teeth of the stator core; windings wound around the teeth provided with the insulating portions; a terminal formed by bending square wire; a substrate provided with a hole into which a top end portion of the terminal is inserted, the substrate having a circuit for driving a motor; and a support portion provided on the upper side of the insulating portions to support a portion of the terminal.

### [Advantageous Effects of Invention]

With the motor stator of the present invention, because the support portions are provided on the insulating portions, a load applied to the terminals when the substrate is mounted can be received by the support portions, and thus, deformation of the terminals can be significantly suppressed. Accordingly, in the motor stator of the present invention, because deformation of the terminals can be significantly suppressed, it is possible to ensure electrical connection between the windings and the terminals, as well as electrical connection between the terminals and the substrate, making it possible to provide a high-quality motor stator.

### [Brief Description of Drawings]

[FIG. 1] FIG. 1 is an explanatory diagram illustrating an example of a motor stator according to Embodiment 1 of the present invention, before mounting a substrate.
[FIG. 2] FIG. 2 is an explanatory diagram illustrating an example of the motor stator according to Embodiment 1 of the present invention, after mounting the substrate.
[FIG. 3] FIG. 3 is an enlarged explanatory diagram illustrating an example of a terminal and its vicinity in the motor stator according to Embodiment 1 of the present invention.
[FIG. 4] FIG. 4 is a schematic diagram for explaining the configuration of the terminal of the motor stator according to Embodiment 1 of the present invention.
[FIG. 5] FIG. 5 is a schematic diagram for explaining the configuration of a support portion of the motor stator according to Embodiment 1 of the present invention.
[FIG. 6] FIG. 6 is an explanatory diagram illustrating a state in which the substrate is mounted to an insulating portion that is not provided with the support portion.
[FIG. 7] FIG. 7 is an explanatory diagram illustrating a state in which the substrate is mounted to the insulating portion that has the support portion.
[FIG. 8] FIG. 8 is an explanatory diagram for explaining a motor for an air-sending-device, which is an example of a motor according to Embodiment 2 of the present invention.
[FIG. 9] FIG. 9 is an explanatory diagram for explaining an air-conditioning apparatus, which is an example of a facility system according to Embodiment 3 of the present invention.

### [Description of Embodiments]

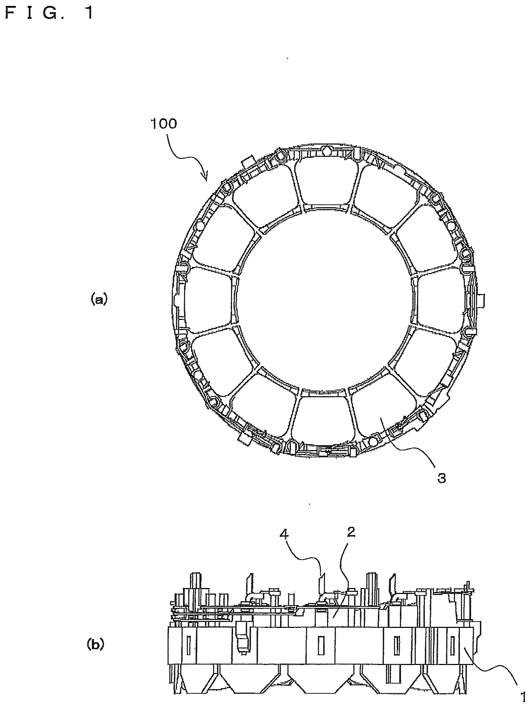

Embodiments of the present invention will be described below with reference to the drawings. Note that, in the drawings mentioned below, including FIG. 1, the relative size of the components may be different from that in the actual configuration. Furthermore, in the drawings mentioned below, including FIG. 1, the same reference numerals denote the same or equivalent components, and this is true through the whole description. Furthermore, the forms of the components described in the whole description are merely examples and are not limited to the forms described.

### Embodiment 1

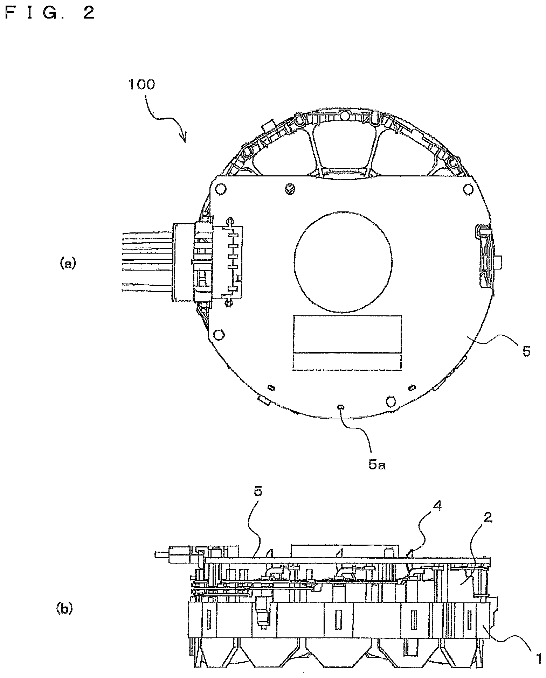

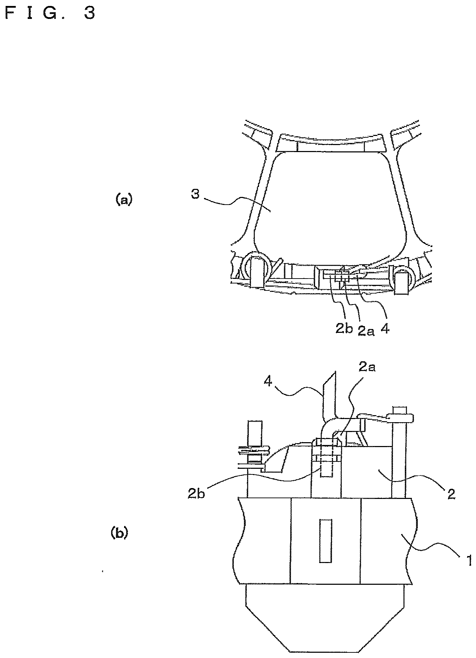

FIG. 1 is an explanatory diagram illustrating an example of a motor stator according to Embodiment 1 of the present invention (hereinbelow, simply a "stator 100"), before mounting a substrate. FIG. 2 is an explanatory diagram illustrating an example of the stator 100, after mounting the substrate. FIG. 3 is an enlarged explanatory diagram illustrating an example of a terminal 4 and its vicinity in the stator 100. Based on FIGS. 1 to 3, the stator 100 will be described. Note that, in FIGS. 1 to 3, (a) is a plan view, and (b) is a side view.

The stator 100 is combined with a rotor, which employs, for example, a permanent magnet, to constitute a blushless DC motor (synchronous motor). Furthermore, the stator 100 includes, for example, three terminals (terminals 4 described below) for supplying power (voltage) to three-phase single Y-connection windings. This stator 100 is used as a motor for an air-sending-device that is installed in, for example, an air-conditioning apparatus having a heat pump. Furthermore, in Embodiment 1, the 12-slot 8-pole stator 100 will be described.

As illustrated in FIG. 1, the stator 100 includes a stator core 1 that has, for example, twelve teeth projecting toward the center; insulating portions 2 provided on the respective teeth of the stator core 1; three-phase single Y-connection windings 3 that are wound around the respective teeth via the insulating portions 2 by using a direct concentrated winding method; and the three terminals 4 that are inserted into three rectangular holes (rectangular holes 2b illustrated in FIG. 3) provided on the connection side in the insulating portions 2 to supply power to the three-phase single Y-connection windings 3.

The stator core 1 is formed by stamping a magnetic steel sheet having a thickness of, for example, about 0.1 to 0.7 mm to form strips; stacking the strips by crimping, welding, or bonding; forming a three-phase single Y-connection on twelve teeth formed as a result of stacking the strips; and bending the stack such that the teeth face the center. That is, the stator 100 is formed by positively bending the stator core 1 such that the teeth are located inside, after forming windings, and then by securely welding abutting portions of the stator core.

The insulating portions 2 are provided to insulate the windings 3 from the stator core 1. The insulating portions 2 are made of a thermoplastic resin, such as PBT (polybutylene terephthalate), and are formed integrally with the stator core 1. The insulating portions 2 are provided for the respective teeth. Furthermore, as illustrated in FIG. 3, support portions 2a are provided on the insulating portions 2, near rectangular holes 2b for receiving the three terminals 4. Note that the insulating portions 2 may be attached to the teeth after they are formed. In such a case, the insulating portions 2 are divided into a connection-side part and a non-connection-side part, and these parts are inserted from both ends, in the axial direction, of the teeth to form the insulating portions 2.

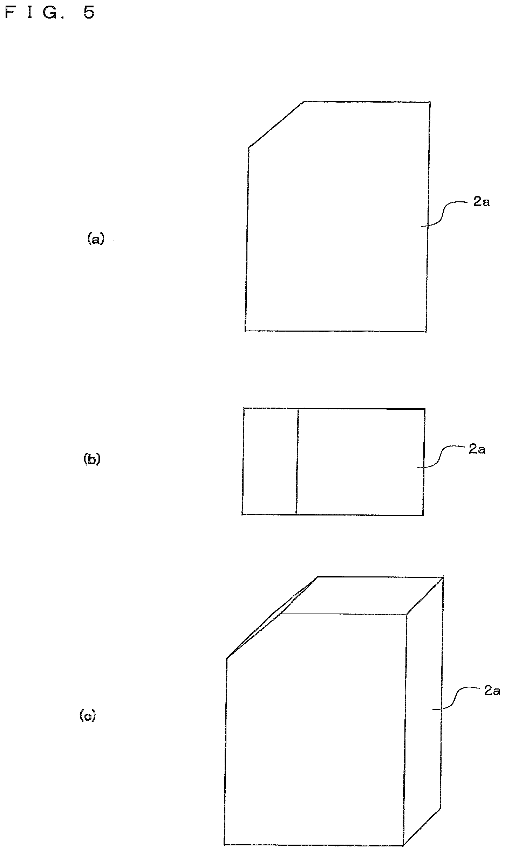

The support portions 2a are provided so as to project upward from the upper ends of the insulating portions 2 (this will be described in detail in FIG. 5). The support portions 2a are configured to support portions of the terminals 4 at the top surfaces thereof. Note that the shape of the support portions 2a is not limited to that illustrated in the figure, and the support portions 2a may have any shape as long as they can receive, via the terminals 4, a load generated when the substrate 5 is mounted (substrate-insertion force). Furthermore, the top surfaces of the support portions 2a do not need to be always in contact with the terminals 4. That is, it is only needed that the top surfaces of the support portions 2a are in contact with portions of the terminals 4 when the terminals 4 are subjected to the load generated when the substrate 5 is mounted.

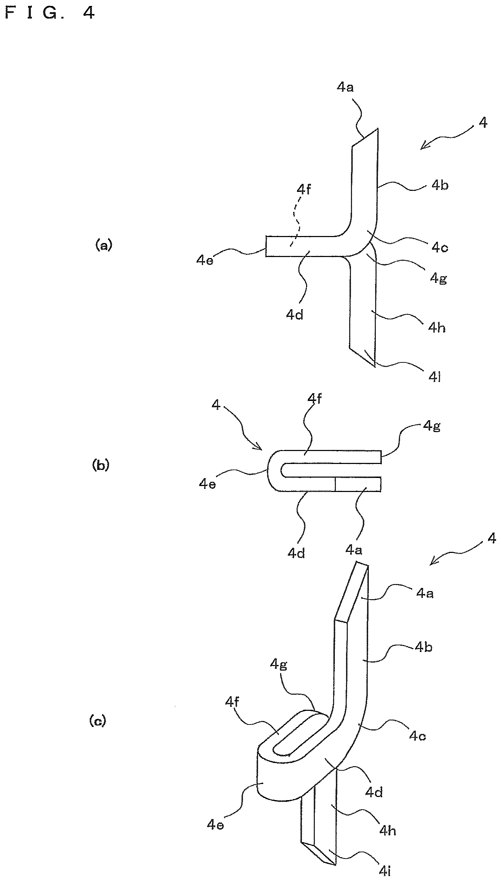

In the three-phase single Y-connection, the terminals 4 (the terminals to which the power is supplied), to which the windings 3 of the respective phases (U phase, V phase, and W phase) are connected, and a neutral point terminal (not shown) are attached to the connection side of the insulating portions 2. The terminals 4 are made of, for example, a rectangular wire having a width of 1.5 mm and a thickness of 0.5 mm and are formed by bending the rectangular wire. Note that the terminals 4 will be described in detail with reference to FIG. 4.

Furthermore, the rectangular wire is made of, for example, copper, and has a copper-tin alloy layer formed thereon by hot dipping. Although an example in which the terminals 4 and the neutral point terminal are made of a rectangular wire will be described, the material does not need to be a rectangular wire but may be a square wire. The rectangular wire is a wire having a substantially rectangular cross section, and the square wire is a wire having a substantially square cross section.

The substrate 5 is provided with a circuit for driving a motor and the like and is formed in a substantially disc-like shape. The substrate 5 is provided with holes 5a into which the terminals 4 are inserted. The number of the holes 5a is equal to the number of the terminals 4. By soldering the holes 5a and the terminals 4 inserted therein, the terminals 4 and the circuit on the substrate 5 are electrically connected.

The windings 3 and the terminals 4 are electrically connected by a heat crimping method. After the windings 3 and the terminals 4 are electrically connected, as illustrated in FIG. 2, the substrate 5 having the holes 5a is disposed on the insulating portions 2 (upper side in FIG. 2(b)). At this time, after the terminals 4 are inserted into the holes 5a in the substrate 5, the terminals 4 and the circuit on the substrate 5 are electrically connected by soldering. Eventually, the windings 3 and the circuit on the substrate 5 are electrically connected via the terminals 4.

Next, a method of connecting stator windings of the stator 100 will be briefly described. As described above, the windings 3 are wound on the stator core 1 that is bent in the opposite direction. For convenience's sake, the first phase will be referred to as U phase, the second phase will be referred to as V phase, and the third phase will be referred to as W phase. By arranging the windings of the respective phases in sequence of U, V, and W, and by applying a-c electrical currents that are 120 degrees out of phase to them, the motor having the stator 100 is driven.

The coils of each phase include four coils. All the coils are wound in the same direction. The starting ends of the coils of each phase are connected to the corresponding one of three terminals 4. On the other hand, the terminating ends of the coils of each phase are connected to the neutral point terminal (neutral point). The stator windings of the stator 100 are connected to form a single Y configuration. More specifically, four U-phase coils are connected in series, four V-phase coils are connected in series, and four W-phase coils are connected in series. The terminating ends of the coils of each phase are connected to the neutral point.

FIG. 4 is a schematic diagram for explaining the configuration of the terminal 4. FIG. 5 is a schematic diagram for explaining the configuration of the support portion 2a. Based on FIGS. 4 and 5, the configurations of the terminal 4 and the support portion 2a will be described in detail. In FIG. 4, (a) is a side view of the terminal 4, as viewed from the outer circumference side of the stator 100, (b) is a plan view of the terminal 4, and (c) is a perspective view of the terminal 4. In FIG. 5, (a) is a side view of the support portion 2a, (b) is a plan view of the support portion 2a, and (c) is a perspective view of the support portion 2a. Note that the configurations are not limited to those illustrated in FIGS. 4 and 5.

First, the terminal 4 will be described.

The terminal 4 includes a top end portion 4a, a first straight portion 4b, a first bent portion 4c, a first horizontal portion 4d, a second bent portion 4e, a second horizontal portion 4f, a third bent portion 4g, a second straight portion 4h, and a base end portion 4i. Note that the expression "straight" in the first straight portion 4b and the second straight portion 4h is used just for the convenience, and the first straight portion 4b and the second straight portion 4h do not need to be strictly straight. Furthermore, the expression "horizontal" in the first horizontal portion 4d and the second horizontal portion 4f is used just for the convenience, and the first horizontal portion 4d and the second horizontal portion 4f do not need to be strictly horizontal. This expression just means that these portions are horizontal in the figure, and it is of course assumed that these portions are not horizontal in a fabrication stage, a use stage, etc. In any case, it should be understood that the terminal of the present invention comprises a wire having a rectangular or square cross section and a bent portion with which the windings can be engaged, and is not solely limited to the form shown in FIG. 4.

The top end portion 4a is a portion that is inserted into the hole 5a in the substrate 5 and is formed in a tapered shape. That is, the top end portion 4a is formed in a tapered shape, in which one side surface at the top end portion is inclined at a predetermined angle with respect to the direction in which the terminal 4 is inserted. Thus, the top end portion 4a has a shape that enables the top end portion 4a to be easily inserted into the hole 5a in the substrate 5. Note that the inclination angle is not specifically limited, and the side surface that is provided with the inclined surface is not limited.

The first straight portion 4b is a portion that is inserted into the hole 5a in the substrate 5 and that is engaged with the hole 5a. The first straight portion 4b extends from the top end portion 4a to the first bent portion 4c.

The first bent portion 4c is a portion constituting a part with which the windings 3 can be engaged and is formed by bending the first straight portion 4b at a substantially right angle at a predetermined position.

The first horizontal portion 4d is a portion constituting a part with which the windings 3 can be engaged and extends from the first bent portion 4c to the second bent portion 4e.

The second bent portion 4e is a portion constituting a part with which the windings 3 can be engaged and is formed by bending the first horizontal portion 4d at a substantially 180 degree angle at a predetermined position.

The second horizontal portion 4f is a portion constituting a part with which the windings 3 can be engaged and extends from the second bent portion 4e to the third bent portion 4g.

The third bent portion 4g is a portion constituting a part with which the windings 3 can be engaged and is formed by bending the second horizontal portion 4f at a substantially right angle (such that the base end portion 4i and the top end portion 4a are oriented in the opposite directions) at a predetermined position.

The second straight portion 4h is a portion that is inserted into the rectangular hole 2b provided in the insulating portions 2 and that is engaged with the rectangular hole 2b. The second straight portion 4h extends from the third bent portion 4g to the base end portion 4i.

The base end portion 4i is a portion that is inserted into the rectangular hole 2b provided in the insulating portions 2 on the connection side and is formed in the same shape as the top end portion 4a, as illustrated in FIG. 4. The base end portion 4i may be formed in a non-tapered shape. Note that, when the base end portion 4i is formed in a tapered shape, the inclination angle thereof is not specifically limited, and the side surface that is provided with the inclined surface is not limited.

That is, when the base end portion 4i is inserted into the rectangular hole 2b, the terminal 4 is attached to the stator core 1, the windings 3 are engaged with the portion surrounded by the first bent portion 4c, the first horizontal portion 4d, the second bent portion 4e, the second horizontal portion 4f, and the third bent portion 4g, and the top end portion 4a is inserted into the hole 5a, in a state in which the substrate 5 is mounted. Although FIG. 4 illustrates an example in which the first horizontal portion 4d and the second horizontal portion 4f are parallel to each other, the first horizontal portion 4d and the second horizontal portion 4f may be brought toward each other by appropriately adjusting the bending angle of the second bent portion 4e, as illustrated in FIG. 3.

Next, the support portions 2a will be described.

As described above, the support portions 2a are provided so as to project upward from the upper ends of the insulating portions 2. Each support portion 2a is configured such that the top surface thereof is substantially horizontal because it supports portions of the terminal 4, more specifically, the first horizontal portion 4d and the second horizontal portion 4f. That is, because the support portion 2a supports the first horizontal portion 4d and the second horizontal portion 4f, even when the hole 5a and the terminal 4 are misaligned, the load generated when the substrate 5 is mounted (substrate-insertion force) can be received via the terminal 4, the allowance that allows deformation of the terminal 4 can be significantly reduced, and deformation of the terminal 4 can be suppressed. Furthermore, the support portion 2a is configured such that it is not disengaged from the insulating portion 2 at least until the substrate 5 is mounted.

Furthermore, as illustrated in FIG. 5, it is preferable that one of the upper end corners of the support portion 2a (the upper end corner on the left side in the figure) be inclined. By doing so, it is possible to prevent the support portion 2a from touching the third bent portion 4g of the terminal 4. Hence, it is possible to significantly reduce the damage to the terminal 4 caused by the upper end corner of the support portion 2a touching the third bent portion 4g of the terminal 4.

Although it is desirable that the support portion 2a supports both the first horizontal portion 4d and the second horizontal portion 4f, the support portion 2a may support at least the first horizontal portion 4d, which is directly subjected to the substrate-insertion force. Furthermore, the support portion 2a may be formed either integrally with the insulating portion 2 or separately from the insulating portion 2 to be attached to the insulating portion 2. When the support portion 2a is formed separately from the insulating portion 2, the material should be selected taking the ease of connection to the insulating portion 2 into consideration. Furthermore, the shape of the support portion 2a is not limited to that illustrated in FIG. 5, but may be any shape that enables the load generated when the substrate 5 is mounted (substrate-insertion force) to be received via the terminal 4. For example, a groove or recess to which the first horizontal portion 4d is fitted may be formed. The support portion 2a does not need to be constantly in contact with the terminal 4.

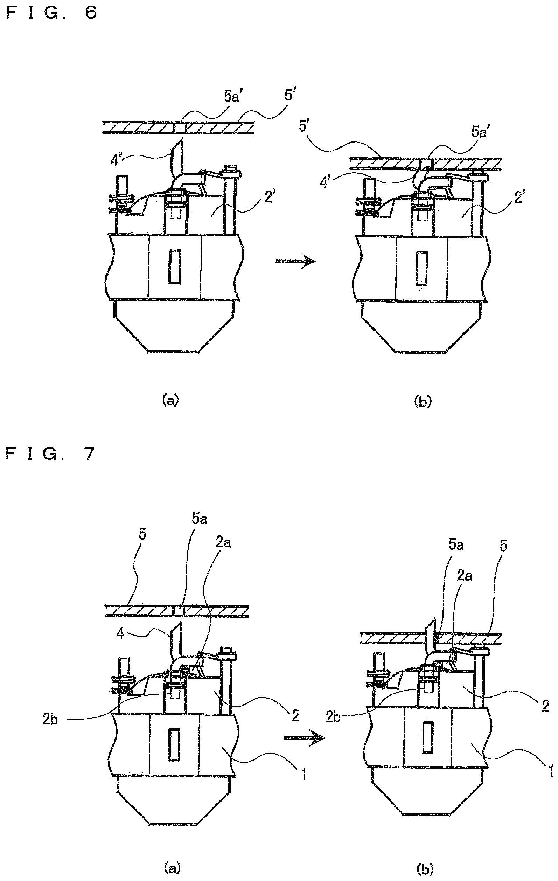

Next, the difference in the state between with and without the support portion of the insulating portion will be described. FIG. 6 is an explanatory diagram illustrating a state in which the substrate is mounted to the insulating portion that is not provided with the support portion. FIG. 7 is an explanatory diagram illustrating a state in which the substrate 5 is mounted to the insulating portion 2 that has the support portion 2a. In FIGS. 6 and 7, (a) is a side view illustrating a state before the substrate is mounted, and (b) is a side view illustrating a state after the substrate is mounted. For the ease of comparison, in FIG. 6, the reference numerals with an apostrophe denote the corresponding members.

A case is assumed in which a substrate 5' is mounted to an insulating portion 2' that is not provided with a support portion, in a state in which the axis of a terminal 4' and the axis of a hole 5a' in the substrate 5' are not completely aligned, as illustrated in FIG. 6(a). In this case, as illustrated in FIG. 6(b), a top end portion 4a' of the terminal 4' is not inserted into the hole 5a'. Therefore, the load generated when the substrate 5' is mounted is applied to the terminal 4', and the space below the substrate 5' serves as the allowance, allowing the terminal 4' to be significantly deformed. Once the terminal 4' is deformed, separation occurs at a heat crimping portion between a winding 3' and the terminal 4', and a soldering fault occurs between the terminal 4' and the substrate 5', resulting in an electrical joint fault between the winding 3' and the circuit on the substrate 5'.

On the other hand, a case is assumed in which the substrate 5 is mounted to the insulating portion 2 that has the support portion 2a near the rectangular hole 2b in the insulating portion 2, in a state in which the axis of the terminal 4 and the axis of the hole 5a in the substrate 5 are not completely aligned, as illustrated in FIG. 7(a). In the stator 100, even if the axis of the terminal 4 and the axis of the hole 5a in the substrate 5 are misaligned, the load generated when the substrate 5 is mounted can be received by the support portion 2a. As a result, as illustrated in FIG. 7(a), the allowance that allows the terminal 4 to move toward the insulating portion 2 is eliminated, whereby the terminal 4 can be inserted in the hole 5a in the substrate 5 without allowing the terminal 4 to be significantly deformed in the space under the substrate 5. That is, the terminal 4 can be inserted into the hole 5a even if it is slightly deformed in the horizontal direction with respect to the sheet of FIG. 7, and thus, a soldering fault between the terminal 4 and the substrate 5 does not occur. Accordingly, an electrical joint fault between the winding 3 and the circuit on the substrate 5 does not occur.

As has been described above, in the stator 100, because deformation of the terminal 4 can be suppressed owing to the support portion 2a, even if the axis of the terminal 4 and the axis of the hole in the substrate 5 are not completely aligned, the terminal 4 is inserted into the hole 5a as long as at least the top end portion 4a of the terminal 4 is inserted into the hole 5a in the substrate 5. Hence, the substrate 5 can be mounted while ensuring electrical connection. Accordingly, in the stator 100, deformation of the terminal 4 can be suppressed owing to the support portion 2a, and generation of a force that separates the heat crimping portion between the winding 3 and the terminal 4, when the substrate 5 is mounted, can be suppressed. Thus, an electrical connection fault caused by deformation of the terminal 4 can be significantly reduced. Accordingly, the high-quality motor stator 100 can be obtained.

### Embodiment 2

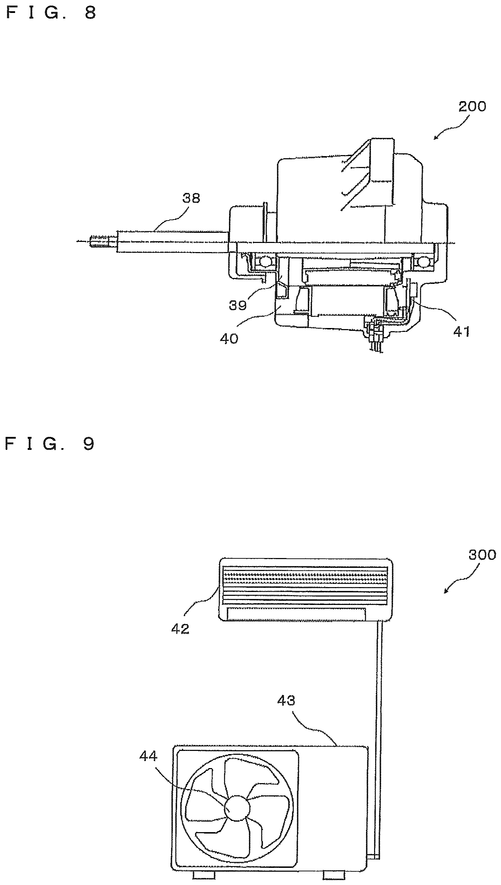

FIG. 8 is an explanatory diagram for explaining a motor 200 for an air-sending-device, which is a motor according to Embodiment 2 of the present invention. Based on FIG. 5, the motor 200 for the air-sending-device will be described. This motor 200 for the air-sending-device includes the stator 100 according to Embodiment 1. Although a motor for an air-sending-device will be described as an example of a motor according to Embodiment 2, the motor according to Embodiment 2 is not limited to a motor for an air-sending-device.

As illustrated in FIG. 8, the motor 200 for the air-sending-device includes a rotor 38, a bracket 39, a molded stator 40, which is formed by molding the stator 100, a connecting member 41 (the substrate 5 described in Embodiment 1), etc. The motor 200 for the air-sending-device is formed by attaching the connecting member 41, which is connected to an outside device, to the stator 100 so that they are mechanically and electrically joined, performing molding processing on them, and attaching the parts, such as the rotor 38, the bracket 39, etc., to them. Hence, the motor 200 for the air-sending-device is high quality because it includes the stator 100 according to Embodiment 1.

### Embodiment 3

FIG. 9 is an explanatory diagram for explaining an air-conditioning apparatus 300, which is a facility system according to Embodiment 3 of the present invention. Based on FIG. 9, the air-conditioning apparatus 300 will be described. This air-conditioning apparatus 300 includes the motor 200 for the air-sending-device according to Embodiment 2.

Although the air-conditioning apparatus will be described as an example of a facility system according to Embodiment 3, the facility system according to Embodiment 3 is not limited to the air-conditioning apparatus.

As illustrated in FIG. 9, the air-conditioning apparatus 300 includes an indoor unit 42 and an outdoor unit 43 connected to the indoor unit 42. The outdoor unit 43 includes an air-sending device 44. The indoor unit 42 also includes an air-sending device (not shown). By installing the motors 200 for the air-sending-device according to Embodiment 2 in the indoor unit 42 and the outdoor unit 43, the quality of these units can be improved.

### [Reference Signs List]

1 stator core, 2 insulating portion, 2a support portion, 2b rectangular hole, 3 winding, 4 terminal, 4a top end portion, 4b first straight portion, 4c first bent portion, 4d first horizontal portion, 4e second bent portion, 4f second horizontal portion, 4g third bent portion, 4h second straight portion, 4i base end portion, 5 substrate, 5a hole, 38 rotor, 39 bracket, 40 molded stator, 41 connecting member, 42 indoor unit, 43 outdoor unit, 44 air-sending device, 100 stator, 200 air-sending-device motor, and 300 air-conditioning apparatus.

## Claims

1. A motor stator (100) comprising:
a stator core (1) that has a plurality of teeth;
insulating portions (2) provided on the teeth of the stator core (1);
windings (3) wound around the teeth provided with the insulating portions (2);
a terminal (4) formed by bending rectangular wire;
a substrate (5) provided with a hole (5a) into which a top end portion (4a) of the terminal (4) is inserted, the substrate (5) having a circuit for driving a motor; and
a support portion (2a) provided on an upper side of the insulating portions (2) to support a portion of the terminal (4).

2. The motor stator (100) of claim 1,
wherein, when a load generated when the substrate (5) is mounted to the insulating portions (2) is applied to the terminal (4), the support portion (2a) receives the load by supporting the terminal (4).

3. The motor stator (100) of claim 1 or 2,
wherein the terminal (4) has a top end portion (4a) that is inserted into the hole (5a) in the substrate (5), a horizontal portion (4d, 4f) constituting a portion with which the windings (3) can be engaged, and a base end portion that is inserted into a connection-side part of the insulating portions (2), and
wherein the horizontal portion (4d, 4f) is supported by the support portion (2a).

4. The motor stator (100) of claim 3,
wherein the top end portion (4a) is formed in a tapered shape.

5. The motor stator (100) of claim 3 or 4,
wherein the horizontal portion includes a first horizontal portion (4d) on the top-end portion side and a second horizontal portion (4f) on the base-end portion side, and
wherein the support portion (2a) supports at least the first horizontal portion (4d).

6. The motor stator (100) of any one of claims 1 to 5,
wherein the rectangular wire is square wire.

7. A motor (200) comprising the motor stator (100) of any one of claims 1 to 6.

8. A facility system (300) comprising the motor (200) of claim 7.

## Patentansprüche

1. Motorstator (100), umfassend:
einen Statorkern (1), der eine Vielzahl von Zähnen aufweist;
Isolierabschnitte (2), die auf den Zähnen des Statorkerns (1) vorgesehen sind;
Wicklungen (3), die um die mit den Isolierabschnitten (2) versehenen Zähne herum gewickelt sind;
einen durch Biegen eines rechteckigen Drahtes gebildeten Anschluss;
ein Substrat (5), das mit einem Loch (5a) versehen ist, in welches ein oberer Endabschnitt (4a) des Anschlusses (4) eingebracht ist, wobei das Substrat (5) eine Schaltung für das Ansteuern eines Motors aufweist; und
einen Stützabschnitt (2a), der auf einer oberen Seite der Isolierabschnitte (2) vorgesehen ist, um einen Abschnitt des Anschlusses (4) zu lagern.

2. Motorstator (100) nach Anspruch 1,
worin, wenn eine Last, die erzeugt wird, wenn das Substrat (5) an den Isolierabschnitten (2) angebracht wird, auf den Anschluss (4) aufgebracht wird, der Stützabschnitt (2a) die Last durch Lagern des Anschlusses (4) aufnimmt.

3. Motorstator (100) nach Anspruch 1 oder 2,
worin der Anschluss (4) einen oberen Endabschnitt (4a), der in das Loch (5a) im Substrat (5) eingebracht ist, wobei ein horizontaler Abschnitt (4d, 4f) einen Abschnitt darstellt, mit dem die Wicklungen (3) in Eingriff gebracht werden können, und einen Basisendabschnitt, der in einen verbindungsseitigen Teil der Isolierabschnitte (2) eingebracht ist, aufweist, und
worin der horizontale Abschnitt (4d, 4f) durch den Stützabschnitt (2a) gelagert wird.

4. Motorstator (100) nach Anspruch 3,
worin der obere Endabschnitt (4a) in einer sich verjüngenden Form ausgebildet ist.

5. Motorstator (100) nach Anspruch 3 oder 4,
worin der horizontale Abschnitt einen ersten horizontalen Abschnitt (4d) auf der oberen Endabschnittsseite, und einen zweiten horizontalen Abschnitt (4f) auf der Basisendabschnittsseite umfasst, und
worin der Stützabschnitt (2a) mindestens den ersten horizontalen Abschnitt (4d) lagert.

6. Motorstator (100) nach einem der Ansprüche 1 bis 5,
worin der rechteckige Draht ein Vierkantdraht ist.

7. Motor (200), umfassend den Motorstator (100) nach einem der Ansprüche 1 bis 6.

8. Anlagensystem (300), umfassend den Motor (200) nach Anspruch 7.

## Revendications

1. Stator de moteur (100) comprenant :
un noyau de stator (1) qui a une pluralité de dents ;
des parties isolantes (2) disposées sur les dents du noyau de stator (1) ;
des enroulements (3) enroulés autour des dents pourvues des parties isolantes (2) ;
une borne (4) formé en incurvant un fil rectangulaire ;
un substrat (5) pourvu d'un trou (5a) dans lequel une partie d'extrémité supérieure (4a) de la borne (4) est insérée, le substrat (5) ayant un circuit pour entraîner un moteur ; et
une partie de support (2a) disposée sur un côté supérieur des parties isolantes (2) pour supporter une partie de la borne (4).

2. Stator de moteur (100) selon la revendication 1,
dans lequel, lorsqu'une charge générée lorsque le substrat (5) est monté sur les parties isolantes (2) est appliquée à la borne (4), la partie de support (2a) reçoit la charge en supportant la borne (4).

3. Stator de moteur (100) selon la revendication 1 ou 2,
dans lequel la borne (4) a une partie d'extrémité supérieure (4a) qui est insérée dans le trou (5a) dans le substrat (5), une partie horizontale (4d, 4f) constituant une partie avec laquelle les enroulements (3) peuvent être mis en prise, et une partie d'extrémité de base qui est insérée dans une partie côté connexion des parties isolantes (2), et
dans lequel la partie horizontale (4d, 4f) est supportée par la partie de support (2a).

4. Stator de moteur (100) selon la revendication 3,
dans lequel la partie d'extrémité supérieure (4a) est formée sous une forme conique.

5. Stator de moteur (100) selon la revendication 3 ou 4,
dans lequel la partie horizontale comprend une première partie horizontale (4d) sur le côté de partie d'extrémité supérieure et une seconde partie horizontale (4f) sur le côté de partie d'extrémité de base, et
dans lequel la partie de support (2a) supporte au moins la première partie horizontale (4d).

6. Stator de moteur (100) selon l'une quelconque des revendications 1 à 5,
dans lequel le fil rectangulaire est un fil carré.

7. Moteur (200) comprenant le stator de moteur (100) selon l'une quelconque des revendications 1 à 6.

8. Système d'installation (300) comprenant le moteur (200) selon la revendication 7.
